(19) Europäisches Patentamt
European Patent Office
Office européen des brevets

(11) **EP 4 765 239 A1**

(12) **EUROPEAN PATENT APPLICATION**
published in accordance with Art. 153(4) EPC

(43) Date of publication:
**24.06.2026 Bulletin 2026/26**

(21) Application number: **24908169.6**

(22) Date of filing: **20.12.2024**

(51) International Patent Classification (IPC):
*H01M 4/36* (2006.01)    *H01M 4/525* (2010.01)
*H01M 4/505* (2010.01)    *H01M 4/131* (2010.01)
*H01M 10/052* (2010.01)    *C01G 53/50* (2025.01)
*H01M 4/02* (2006.01)

(52) Cooperative Patent Classification (CPC):
C01G 53/50; H01M 4/02; H01M 4/131; H01M 4/36;
H01M 4/505; H01M 4/525; H01M 10/052;
Y02E 60/10

(86) International application number:
**PCT/KR2024/020843**

(87) International publication number:
**WO 2025/135887 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023  KR 20230188929
19.12.2024  KR 20240191934**

(71) Applicant: **LG Energy Solution, Ltd.
Seoul 07335 (KR)**

(72) Inventors:
• **CHO, Hyeon Jin
  Daejeon 34122 (KR)**
• **BAEK, So Ra
  Daejeon 34122 (KR)**
• **JU, Ji Young
  Daejeon 34122 (KR)**
• **YOO, Dong Wan
  Daejeon 34122 (KR)**
• **JO, Chi Ho
  Daejeon 34122 (KR)**

(74) Representative: **Hoffmann Eitle
Patent- und Rechtsanwälte PartmbB
Arabellastraße 30
81925 München (DE)**

(54) **CATHODE ACTIVE MATERIAL, AND CATHODE AND LITHIUM SECONDARY BATTERY COMPRISING SAME**

(57)    The present invention relates to a positive electrode active material including a lithium composite transition metal oxide in the form of a single particle composed of one nodule or a pseudo-single particle, which is a composite of 30 or fewer nodules, and a coating layer including a first coating layer formed on the surface of the lithium composite transition metal oxide and a second coating layer formed on the surface of the first coating layer, wherein the lithium composite transition metal oxide has a roundness, which is defined by Equation 1 below, of 0.50 to 0.68, and the second coating layer contains boron, wherein the boron is included in a weight of 300 ppm to 2400 ppm based on the total weight of the positive electrode active material.

[Equation 1]

$$\text{Roundness} = (4 \times \text{Area}) / (\pi \times R^2)$$

In Equation 1 above, R denotes the length of a major axis passing through the center of the lithium composite transition metal oxide, and Area denotes an actual area of the lithium composite transition metal oxide.

[FIG.1]

## Description

### TECHNICAL FIELD

### Cross-reference to Related Applications

This application claims the benefit of Korean Patent Application Nos. 10-2023-0188929, filed on December 21, 2023, and 10-2024-0191934, filed on December 19, 2024, in the Korean Intellectual Property Office, the disclosures of which are incorporated herein in their entirety by reference.

### Technical Field

The present invention relates to a positive electrode active material, and a positive electrode and a lithium secondary battery including the positive electrode active material, and more specifically, to a positive electrode active material which achieves a kinetic balance with a silicon-based negative electrode and improves a side reaction with an electrolyte solution, and a positive electrode and a lithium secondary battery including the positive electrode active material.

### BACKGROUND ART

A lithium secondary battery is generally composed of a positive electrode, a negative electrode, a separator, and an electrolyte, and the positive electrode and the negative electrode include active materials capable of intercalation and de-intercalation of lithium ions.

As a positive electrode active material of the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), and the like have been used. Among the above, the lithium cobalt oxide is advantageous in that the driving voltage is high and the capacity properties are excellent, but since the price of cobalt, which is a raw material, is high, and the supply thereof is unstable, so that it is difficult to commercially apply the lithium cobalt oxide to a large-capacity battery. The lithium nickel oxide has poor structural stability, so that it is difficult to implement sufficient lifespan properties. Meanwhile, the lithium manganese oxide has excellent stability, but has a problem in that the capacity properties thereof are poor. Therefore, in order to compensate for problems of lithium transition metal oxides including Ni, Co, or Mn alone, lithium composite transition metal oxides including two or more transition metals have been developed, and among them, a lithium nickel cobalt manganese oxide including Ni, Co, and Mn is widely used.

A typical lithium nickel cobalt manganese oxide is generally in the form of a spherical secondary particle in which tens to hundreds of primary particles are aggregated. However, in the case of a lithium nickel cobalt manganese oxide in the form of a secondary particle in which a large number of primary particles are aggregated, particle breakage easily occurs wherein primary particles are broken off during a roll-pressing process when manufacturing a positive electrode, and there is a problem in that cracks are generated inside particles during a charging and discharging process. When particles of a positive electrode active material are broken or cracked, the contact area with an electrolyte solution increases, so that gas generation and active material deterioration caused by a side reaction with the electrolyte solution increase, resulting in a problem in that lifespan properties are degraded.

In addition, in order to achieve a high capacity of a lithium secondary battery, it is necessary to apply a silicon-based negative electrode active material to a negative electrode, but if the silicon-based negative electrode active material is used, there is a problem in that the negative electrode is deteriorated due to the imbalance of a kinetic balance between the positive electrode and the negative electrode.

Meanwhile, in order to improve the lifespan properties of a lithium nickel cobalt manganese oxide, technologies for suppressing the contact with an electrolyte solution by forming a coating layer on the surface of the lithium nickel cobalt manganese oxide have been proposed. However, the above-described methods have a problem in that an effect of improving lifespan properties is not sufficient, and initial resistance properties are degraded as the thickness of the coating layer increases.

### DISCLOSURE OF THE INVENTION

### TECHNICAL PROBLEM

In order to solve the above-described problem, the present invention is to provide a positive electrode active material having excellent lifespan properties by adjusting the shape of a lithium composite transition metal oxide particle in the form of a single particle or a pseudo-single particle, and additionally, forming a boron coating layer, and a positive electrode and a lithium secondary battery to which the positive electrode active material is applied.

## TECHNICAL SOLUTION

[1] The present invention provides a positive electrode active material including a lithium composite transition metal oxide in the form of a single particle composed of one nodule or a pseudo-single particle, which is a composite of 30 or fewer nodules, and a coating layer including a first coating layer formed on the surface of the lithium composite transition metal oxide and a second coating layer formed on the surface of the first coating layer, wherein the lithium composite transition metal oxide has a roundness, which is defined by Equation 1 below, of 0.50 to 0.68, and the second coating layer contains boron, wherein the content of boron is 300 ppm to 2400 ppm based on the total weight of the positive electrode active material.

$$[Equation\ 1]$$

$$Roundness\ =\ (4{\times}Area)\ /\ (\pi{\times}R^2)$$

In Equation 1 above, R denotes the length of a major axis passing through the center of the lithium composite transition metal oxide, and Area denotes an actual area of the lithium composite transition metal oxide.
[2] In [1] above, the lithium composite transition metal oxide may have a composition represented by Formula 1 below.

$$[Formula\ 1]\qquad Li_{1+x}Ni_aCo_bMn_cAl_dM^1_eO_2$$

In Formula 1 above, $M^1$ is one or more selected from the group consisting of W, Zr, Y, Ba, Ca, Ti, Mg, Ta, and Nb, and $0 \le x \le 0.5$, $0.8 \le a < 1.0$, $0 < b \le 0.1$, $0 < c < 0.2$, $0 < d \le 0.05$, and $0 \le e \le 0.05$.
[3] In [1] or [2] above, the lithium composite transition metal compound may have a nickel content of 80 mol% or greater among all metals excluding lithium.
[4] In at least one among [1] to [3] above, the lithium composite transition metal oxide may have an average particle diameter ($D_{50}$) of 1 $\mu$m to 8 $\mu$m.
[5] In at least one among [1] to [4] above, the lithium composite transition metal oxide may have the roundness of 0.58 to 0.65.
[6] In at least one among [1] to [5] above, the first coating layer may include one or more selected from the group consisting of Ni, Co, and Al.
[7] In at least one among [1] to [6] above, the second coating layer may have a content of the boron of 400 ppm to 1400 ppm based on the total weight of the positive electrode active material.
[8] In at least one among [1] to [7] above, the positive electrode active material may have a BET specific surface area of 0.4 $m^2$/g to 1.0 $m^2$/g.
[9] The present invention provides a positive electrode including the positive electrode active material according to at least one among [1] to [8] above.
[10] The present invention provides a lithium secondary battery including the positive electrode according to [9] above, a negative electrode, a separator interposed between the positive electrode and the negative electrode, and an electrolyte.
[11] In [10] above, the negative electrode may include a negative electrode active material layer including a silicon-based negative electrode active material.
[12] In [11] above, the negative electrode may further include a carbon-based negative electrode active material.

## ADVANTAGEOUS EFFECTS

A positive electrode active material according to the present invention may implement an excellent lifespan by adjusting the shape of a lithium composite transition metal oxide in the form of a single particle, and achieving a kinetic balance with a silicon-based negative electrode.
In addition, the positive electrode active material according to the present invention is prepared by preparing a lithium composite transition metal oxide in the form of a single particle composed of one nodule or a pseudo-single particle, which is a composite of 30 or fewer nodules, and then firing the same at a high temperature, followed by forming a boron coating layer. If the high-temperature firing is performed and the boron coating layer is formed as in the present invention, the surface structure of the lithium composite transition metal oxide may be improved due to the high-temperature firing, so that it is possible to suppress an increase in resistance after the coating layer is formed, and a side reaction with an electrolyte solution on the surface of a positive electrode is improved, so that it is possible to reduce gas generation.

## BRIEF DESCRIPTION OF THE DRAWINGS

FIG. 1 is a photograph showing the results of Scanning Electron Microscope-Image Analysis Management (SEM-IAM) analysis on the surface and inside of a positive electrode active material prepared by Example 1.
FIG. 2 is a photograph showing the results of Scanning Electron Microscope-Image Analysis Management (SEM-IAM) analysis on the surface and inside of a positive electrode active material prepared by Comparative Example 1.

## MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, a "single particle" refers to a particle composed of one nodule.

The "nodule" refers to a sub-particle unit constituting a single particle or a pseudo-single particle, and may be a single crystal with no grain boundaries, or a polycrystal with no grain boundaries in appearance when observed with a field of view of 5000 to 20000 times using a scanning electron microscope.

The "pseudo-single particle" refers to a composite formed by aggregation of 30 or fewer, preferably 2 to 30 nodules.

In the present invention, "roundness" is a ratio of the actual area of a lithium composite transition metal oxide to the area of a circle having a major axis passing through the center of the lithium composite transition metal oxide as the diameter.

The "roundness" may be obtained by extracting an image through a Scanning Electron Microscope (SEM) of powder to be measured (e.g., a lithium composite transition metal oxide), and then identifying particles through Image Analysis Management (IAM) analysis to measure the roundness of the corresponding lithium composite transition metal oxide.

In the present invention, an "average particle diameter $D_{50}$" refers to a particle size at 50% of the volume cumulative particle size distribution of powder to be measured (e.g., a lithium composite transition metal oxide). The average particle diameter $D_{50}$ may be measured by a laser diffraction method. For example, the average particle diameter ($D_{50}$) may be measured by dispersing powder to be measured in a dispersion medium, and then introducing the mixture into a commercially available laser diffraction particle size measurement device (e.g., Microtrac MT 3000) to be irradiated with an ultrasonic wave of about 28 kHz to an output of 60 W, thereby obtaining a volume cumulative particle size distribution graph, and then obtaining a particle size corresponding to 50% of a cumulative volume.

In the present invention, a "specific surface area" is measured by a BET method, and specifically, may be calculated from the adsorption amount of nitrogen gas under a liquid nitrogen temperature (77K) using Belsorp-mino II of BEL Japan Co., Ltd.

## Positive electrode active material

Hereinafter, a positive electrode active material according to the present invention will be described.

The positive electrode active material according to the present invention includes (1) a lithium composite transition metal oxide in the form of a single particle or a pseudo-single particle having a roundness of a specific value, (2) a boron coating layer including a first coating layer formed on the surface of the lithium composite transition metal oxide and a second coating layer formed on the surface of the first coating layer, wherein the boron is included in a weight of 300 ppm to 2400 ppm based on the total weight of the positive electrode active material.

## (1) Lithium composite transition metal oxide

The lithium composite transition metal oxide is a single particle composed of one nodule, or a pseudo-single particle, which is a composite of 30 or fewer, preferably 2 to 30, and more preferably 2 to 20 nodules.

The lithium composite transition metal oxide in the form of a single particle or a pseudo-single particle as described above has higher particle strength than typical lithium composite transition metal oxide particles in the form of a secondary particle in which tens to hundreds of primary particles are aggregated, and thus, there is less particle breakage during roll-pressing.

In addition, the lithium composite transition metal oxide in the form of a single particle or a pseudo-single particle according to the present invention has a small number of nodules constituting the particle, so that there is not much of a change due to volume expansion and contraction of the nodules during charging and discharging, and accordingly, the generation of cracks inside the particle is also significantly reduced.

The lithium composite transition metal oxide may be, for example, a lithium nickel-based oxide, and specifically, a lithium nickel-based oxide including nickel, cobalt, and manganese, wherein the molar ratio of nickel among metals excluding lithium is 50 mol% or greater.

Preferably, the lithium composite transition metal oxide may have a composition represented by [Formula 1] below.

$$[\text{Formula 1}] \qquad \text{Li}_{1+x}\text{Ni}_a\text{Co}_b\text{Mn}_c\text{Al}_d\text{M}^1_e\text{O}_2$$

In Formula 1 above, $M^1$ is one or more selected from the group consisting of W, Zr, Y, Ba, Ca, Ti, Mg, Ta, and Nb. An $M^1$ element is not necessarily included, but when included in an appropriate amount, the $M^1$ element may serve to improve crystal structure stability during firing.

The 1+x represents the molar ratio of lithium in the lithium composite transition metal oxide, and the x may be $0 \leq x \leq 0.5$, preferably $0.05 \leq x \leq 0.45$, and more preferably $0.1 \leq x \leq 0.4$. If the molar ratio of the lithium satisfies the above-described range, the crystal structure of a lithium composite transition metal oxide particle may be stably formed.

The a represents the molar ratio of nickel among all metals excluding lithium in the lithium composite transition metal oxide, and the a may be $0.8 \leq a < 1.0$, preferably $0.85 \leq a < 1.0$, and more preferably $0.9 \leq a < 1.0$. If the molar ratio of nickel satisfies the above-described range, high energy density may be exhibited, so that it is possible to implementa high capacity.

The b represents the molar ratio of cobalt among all metals excluding lithium in the lithium composite transition metal oxide, and the b may be $0 < b \leq 0.1$, preferably $0 < b \leq 0.09$, and more preferably $0.01 \leq b \leq 0.08$. If the molar ratio of cobalt satisfies the above-described range, good resistance properties and output properties may be implemented.

The c represents the molar ratio of manganese among all metals excluding lithium in the lithium composite transition metal oxide, and the c may be $0 < c < 0.2$, preferably $0 < c \leq 0.18$, and more preferably $0.02 \leq c \leq 0.17$. If the molar ratio of manganese satisfies the above-described range, the positive electrode active material may exhibit excellent structural stability.

The d represents the molar ratio of aluminum among all metals excluding lithium in the lithium composite transition metal oxide, and the d may be $0 < d \leq 0.05$, preferably $0 < d \leq 0.04$, and more preferably $0 < d \leq 0.03$. If the molar ratio of aluminum satisfies the above-described range, stability and excellent output properties may be implemented.

The e represents the molar ratio of the $M^1$ element among all metals excluding lithium in the lithium composite transition metal oxide, and the e may be $0 \leq e \leq 0.05$, preferably $0 \leq e \leq 0.04$, and more preferably $0 \leq e \leq 0.03$. If the molar ratio of the $M^1$ element satisfies the above-described range, the positive electrode active material may exhibit excellent structural stability.

The lithium composite transition metal oxide may have a composition in which the content of nickel among all metals excluding lithium is 80 mol% or greater, preferably 82 mol% or greater, and more preferably 85 mol% or greater. If the content of nickel in the lithium composite transition metal oxide satisfies the above-described range, high energy density may be implemented.

The lithium composite transition metal oxide may have an average particle diameter ($D_{50}$) of 1 $\mu$m to 8 $\mu$m, preferably 2 $\mu$m to 6 $\mu$m, and more preferably 3 $\mu$m to 4 $\mu$m. If the average particle diameter ($D_{50}$) is too small, processability is reduced during electrode manufacturing, and electrolyte solution wettability is reduced, which may increase electrochemical properties, and if the average particle diameter ($D_{50}$) is too large, there is a problem in that resistance increases, and output properties are degraded.

The lithium composite transition metal oxide may have a roundness of 0.50 to 0.68, preferably 0.55 to 0.66, and more preferably 0.58 to 0.65. If the roundness satisfies the above-described range, lithium ions may diffuse more smoothly into a particle, and the contact area between the positive electrode active material and the electrolyte increases, so that battery chemistry performance may be improved. In addition, since the distance between particles in an electrode is maintained relatively constant, the flow of current in the electrode is facilitated, and the uniform particle arrangement is achieved, resulting in an increase in mechanical stability, so that the cycle lifespan of a battery may be improved.

A lithium composite transition metal oxide having the above-described average particle diameter ($D_{50}$) and the above-described roundness may be prepared by the following method.

The method for preparing a positive electrode active material according to the present invention includes the steps of 1) mixing a transition metal precursor and a first lithium raw material, and then subjecting the mixture to primary firing, thereby forming a primary fired product which includes a single particle-based lithium composite transition metal oxide including single particles composed of 1 to 30 nodules, and 2) subjecting the primary fired product to secondary firing, thereby forming a secondary fired product.

1) Step of forming primary fired product

First, a transition metal precursor and a first lithium raw material are mixed, and then subjected to primary firing, thereby forming a primary fired product.

In this case, the transition metal precursor may be a commercially available precursor, such as a nickel-cobalt-manganese-based hydroxide or the like, purchased and used, or may be prepared according to a method for preparing a precursor, the method known in the art.

Preferably, the transition metal precursor may be a transition metal hydroxide represented by Formula 2 below.

$$[\text{Formula 2}] \qquad Li_{1+x1}Ni_{a1}Co_{b1}Mn_{c1}Al_{d1}M^2_{e1}O2$$

In Formula 2 above, $M^2$ is the same as defined in Formula 1. That is, $M^2$ is one or more selected from the group consisting of W, Zr, Y, Ba, Ca, Ti, Mg, Ta, and Nb.

The $1+x1$ represents the molar ratio of lithium in the lithium composite transition metal oxide, and the x may be $0 \le x1 \le 0.5$, preferably $0.05 \le x1 \le 0.45$, and more preferably $0.1 \le x1 \le 0.4$. If the molar ratio of lithium satisfies the above-described range, the crystal structure of the lithium composite transition metal oxide may be stably formed.

The a1 represents the molar ratio of nickel among all metals excluding lithium in the lithium composite transition metal oxide, and the a1 may be $0.8 \le a1 < 1.0$, preferably $0.85 \le a1 < 1.0$, and more preferably $0.9 \le a1 < 1.0$. If the molar ratio of nickel satisfies the above-described range, high energy density may be exhibited, so that it is possible to implement a high capacity.

The b1 represents the molar ratio of cobalt among all metals excluding lithium in the lithium composite transition metal oxide, and the b1 may be $0 < b1 \le 0.1$, preferably $0 < b1 \le 0.09$, and more preferably $0.01 \le b1 \le 0.08$. If the molar ratio of cobalt satisfies the above-described range, good resistance properties and output properties may be implemented.

The c1 represents the molar ratio of manganese among all metals excluding lithium in the lithium composite transition metal oxide, and the c1 may be $0 < c1 < 0.2$, preferably $0 < c1 \le 0.18$, and more preferably $0.02 \le c1 \le 0.17$. If the molar ratio of manganese satisfies the above-described range, the positive electrode active material may exhibit excellent structural stability.

The d1 represents the molar ratio of aluminum among all metals excluding lithium in the lithium composite transition metal oxide, and the d1 may be $0 < d1 \le 0.05$, preferably $0 < d1 \le 0.04$, and more preferably $0 < d1 \le 0.03$. If the molar ratio of aluminum satisfies the above-described range, stability and excellent output properties may be implemented.

The e1 represents the molar ratio of an $M^2$ element among all metals excluding lithium in the lithium composite transition metal oxide, and the e1 may be $0 \le e1 \le 0.05$, preferably $0 \le e1 \le 0.04$, and more preferably $0 \le e1 \le 0.03$. If the molar ratio of the $M^2$ element satisfies the above-described range, the positive electrode active material may exhibit excellent structural stability.

The transition metal precursor may be prepared by, for example, performing a co-precipitation reaction while introducing a transition metal aqueous solution, an ammonium cation complex forming agent, and a basic compound to a reactor, followed by stirring the mixture.

The transition metal aqueous solution may be prepared by dissolving a transition metal-containing raw material in a solvent such as water, and for example, may be prepared by dissolving a nickel-containing raw material, a cobalt-containing raw material, and an aluminum-containing raw material in water. In addition, if necessary, the transition metal aqueous solution may further include an $M^2$ element-containing raw material.

Meanwhile, the transition metal-containing raw material may be an acetate, carbonate, nitrate, sulfate, halide, sulfide, oxide, or the like of a transition metal.

The $M^2$ element-containing raw material may be an acetate, carbonate, nitrate, sulfate, halide, sulfide, oxide, or the like of an $M^2$ element.

The input amount of each transition metal-containing raw material may be determined in consideration of the molar ratio of a transition metal in a positive electrode active material to be finally produced.

Meanwhile, the ammonium cation complex forming agent may include at least one compound selected from the group consisting of $NH_4OH$, $(NH_4)_2SO_4$, $NH_4NO_3$, $NH_4Cl$, $CH_3COONH_4$, and $NH_4CO_3$, and the compound may be introduced into a reactor in the form of a solution in which the compound is dissolved in a solvent. In this case, as the solvent, water, or a mixture of an organic solvent (specifically, an alcohol, etc.), which may be uniformly mixed with water, and water may be used.

The basic compound may be at least one compound selected from the group consisting of NaOH, KOH, and $Ca(OH)_2$, and the compound may be introduced into a reactor in the form of a solution in which the compound is dissolved in a solvent. In this case, as the solvent, water, or a mixture of an organic solvent (specifically, an alcohol, etc.), which may be uniformly mixed with water, and water may be used.

If the transition metal aqueous solution, the ammonium cation complex forming agent, and the basic compound are introduced into a reactor and stirred as described above, transition metals in the transition metal aqueous solution are co-precipitated to generate precursor particles in the form of transition metal hydroxides.

In this case, the transition metal aqueous solution, the ammonium cation complex forming agent, and the basic compound are introduced in an amount such that the pH of a reaction solution is within a desired range.

When the precursor particles are formed by the method described above, particles are separated from the reaction solution to obtain a transition metal precursor. For example, the precursor particles are separated from the reaction solution by filtering the reaction solution, and then the separated precursor particles may be washed with water and dried to obtain a transition metal precursor.

Next, the transition metal precursor, and a first lithium raw material are mixed and then subjected to primary firing, thereby forming a primary fired product which includes a single particle-based lithium composite transition metal oxide including 1 to 30 primary particles. In this case, if necessary, the $M^2$ element-containing raw material may be mixed together and fired.

As the first lithium raw material, a lithium-containing sulfate, nitrate, acetate, carbonate, oxalate, citrate, halide, hydroxide, oxyhydroxide, or the like may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $Li_3C_6H_5O_7$, or a mixture thereof may be used.

Meanwhile, the primary firing is performed under a condition in which primary particles are grown to 1 $\mu$m or greater, thereby forming a single particle-based lithium composite transition metal oxide.

An appropriate primary firing temperature may vary depending on the metal composition in a precursor, and for example, if the content of nickel is 80 mol% or greater, the primary firing may be performed at a temperature of 750 °C to 1000 °C, preferably 800 °C to 950 °C, and more preferably 825 °C to 950 °C.

In addition, the primary firing time may be 6 hours to 30 hours, preferably 8 hours to 25 hours, and more preferably 8 hours to 20 hours.

In addition, the primary firing may be performed in an oxygen atmosphere. In the present specification, the oxygen atmosphere means an atmosphere in which oxygen in an amount sufficient for firing is included, including an atmospheric atmosphere. Particularly, it is preferable that the firing is performed in an atmosphere in which the oxygen partial pressure is higher than that of the atmospheric atmosphere.

If the primary firing is performed under the above-described conditions, a single particle-based lithium composite transition metal oxide having excellent electrochemical properties may be formed. If the primary firing temperature and time are too small, primary particles are not sufficiently grown, resulting in preparing a positive electrode active material in the form of a secondary particle, and if too large, a rock-salt phases, which is electrically inactive, is formed in a large amount during the firing process, resulting in manufacturing a fired product which is structurally unstable and has a low crystallinity, so that electrochemical properties may be degraded.

2) Secondary firing step

The secondary firing may be performed at a temperature lower than the primary firing temperature by 50 °C to 200 °C. If the secondary firing temperature is higher than the primary firing temperature, a rock salt phase is excessively formed on the surface of the lithium composite transition metal oxide, so that the surface is deteriorated and lithium by-products remain, which may reduce electrochemical properties, and if the secondary firing is performed at a temperature lower than the first firing temperature by 200 °C or higher, the rate of lithium intercalation decreases, resulting in degrading electrochemical performance, and an effect of improving primary particle roundness is insignificant. For example, the secondary firing temperature may be 700 °C to 900 °C, preferably 700 °C to 875 °C, and more preferably 680 °C to 850 °C.

The secondary firing time may be, for example, 6 hours to 15 hours, preferably 8 hours to 15 hours, and more preferably 8 hours to 14 hours, in terms of increasing the crystallinity of the crystal structure inside the positive electrode active material.

In addition, the secondary firing may be performed in an oxygen atmosphere.

If the secondary firing is performed under the above-described conditions, a positive electrode active material having excellent electrochemical properties and a desired primary particle surface shape may be easily formed.

**(2) Coating layer**

The positive electrode active material according to the present invention includes a first coating layer formed on the surface of the lithium composite transition metal oxide, and a second coating layer formed on the surface of the first coating layer.

The first coating layer may include one or more selected from the group consisting of Ni, Co, and Al, preferably one or more of Co and Al, and more preferably Co and Al. By including the above, structural stability and particle strength of the active material may be improved, and an effect of improving high-temperature lifespan properties and resistance increase rate may be obtained. Preferably, the first coating layer may include $Al_2O_3$ and/or $Co_3O_4$ components.

Next, the second coating layer contains boron. If the second coating layer contains boron, the lithium movement on the surface of the lithium composite transition metal oxide is facilitated, so that an effect of improving an initial capacity may be obtained compared to a case in which a coating layer is not formed.

In this case, the boron may be included in a weight of 300 ppm to 2400 ppm, preferably 350 ppm to 2000 ppm, and more preferably 400 ppm to 1400 ppm, based on the total weight of the positive electrode active material. If the content of boron is less than 300 ppm based on the total weight of the positive electrode active material, a gas generation amount increases, so that there is a problem in that lifespan properties are degraded, and if greater than 2400 ppm, there are problems in that initial resistance increases and a capacity retention rate decreases.

The boron may be included in a weight of 300 ppm to 2400 ppm, preferably 400 ppm to 1400 ppm, and more preferably 1000 ppm to 1400 ppm, based on the total weight of the positive electrode active material. If the above-described range is satisfied, the boron reacts with oxygen to form a surface-protective oxide such as B2O3, thereby suppressing side reactions with an electrolyte, resulting in reducing the gas generation amount, and accordingly, high-temperature lifespan properties may be improved.

The positive electrode active material may have a BET specific surface area of 0.4 $m^2/g$ to 1.0 $m^2/g$, preferably 0.45 $m^2/g$ to 0.95 $m^2/g$, and more preferably 0.45 $m^2/g$ to 0.9 $m^2/g$. If the BET specific surface area satisfies the above-described range, appropriate electrochemical properties may be secured. If the specific surface area is too small, reaction sites decrease, which may degrade electrochemical properties, and if too large, the reaction area with the electrolyte increases, which may further activate side reactions at a high voltage.

**Positive electrode**

Next, a positive electrode according to the present invention will be described.

The positive electrode according to the present invention includes a positive electrode active material layer containing the positive electrode active material. Specifically, the positive electrode includes a positive electrode current collector, and a positive electrode active material layer formed on the positive electrode current collector and including the positive electrode active material.

In the positive electrode, the positive electrode current collector is not particularly limited as long as it has conductivity without causing a chemical change in the battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 $\mu$m to 500 $\mu$m, and microscopic irregularities may be formed on the surface of the positive electrode current collector to improve the adhesive force of the positive electrode active material. For example, the positive electrode current collector may be used in various forms such as a film, a sheet, a foil, a net, a porous body, a foam, and a non-woven body.

In addition, the positive electrode active material layer may include a conductive material and a binder, together with the positive electrode active material described above.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may typically be included in an amount of 1 wt% to 30 wt%, preferably 1 wt% to 20 wt%, and more preferably 1 wt% to 10 wt%, based on the total weight of a positive electrode active material layer.

The binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt%, based on the total weight of a positive electrode active material layer.

The positive electrode may be manufactured according to a typical method for manufacturing a positive electrode. For example, the positive electrode may be manufactured by mixing a positive electrode active material, a binder, and/or a conductive material in a solvent to prepare a positive electrode slurry, and applying the positive electrode slurry on a positive electrode current collector, followed by drying and roll-pressing.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The solvent may be used in an amount sufficient to dissolve or disperse the positive electrode active material, the conductive material, and the binder in consideration of the application thickness and preparation yield of a slurry, and to allow the slurry to have a viscosity which may exhibit excellent thickness uniformity when applied for the manufacturing of the positive electrode later.

In another method, the positive electrode may be manufactured by casting the positive electrode slurry on a separate support and then laminating a film peeled off from the support on a positive electrode current collector.

**Lithium secondary battery**

Next, a lithium secondary battery according to the present invention will be described.

Specifically, the lithium secondary battery includes the above-described positive electrode, a negative electrode positioned to face the positive electrode, a separator interposed between the positive electrode and the negative electrode, and an electrolyte, and since the positive electrode is the same as that described above, a detailed description thereof will be omitted, and hereinafter, only the rest of the components will be described in detail.

**(1) Negative electrode**

The negative electrode according to the present invention includes a negative electrode active material layer including a negative electrode active material, and the negative electrode active material layer may include, if necessary, a conductive material and/or a binder.

As the negative electrode active material, various negative electrode active materials used in the art, for example, a silicon-based negative electrode active material, a carbon-based negative electrode active material, a metal alloy, or the like may be used.

The negative electrode active material may include a silicon-based negative electrode active material.

Since the silicon-based negative electrode active material has a higher theoretical capacity than a carbon-based negative electrode active material, and a higher reaction rate with lithium than the same, if the negative electrode includes the silicon-based negative electrode active material, energy density and rapid charging performance are improved. However, since the silicon-based negative electrode active material has a large irreversible capacity, and has large volume expansion during charging and discharging, the silicon-based negative electrode active material is inferior in terms of lifespan properties. In particular, if used in combination with a lithium composite transition metal oxide having a large gas generation amount, there is a problem in that the degradation in lifespan properties is further intensified. However, if a lithium composite transition metal oxide in the form of a single particle or a pseudo-single particle is applied as in the present invention, the gas generation is less than that of a typical lithium composite transition metal oxide in the form of a secondary particle, so that the degradation in lifespan properties may be minimized, and an excessive amount of lithium generated from a rock-salt phase during an activation process of the lithium composite transition metal oxide may compensate for the irreversible capacity of the silicon-based negative electrode active material.

The silicon-based negative electrode active material may be, for example, Si, $SiO_w$ (wherein, $0<w\leq2$), a Si-C composite, a Si-$M^a$ alloy ($M^a$ is one or more selected from the group consisting of Al, Sn, Mg, Cu, Fe, Pb, Zn, Mn, Cr, Ti, and Ni), or a combination thereof.

Meanwhile, the silicon-based negative electrode active material may be, if necessary, doped with an $M^b$ metal, and in this case, the $M^b$ metal may be a Group 1 alkali metal element and/or a Group 2 alkaline earth metal element, for example, Li, Mg, or the like. Specifically, the silicon-based negative electrode active material may be Si, $SiO_w$ (wherein, $0<w\leq2$), a Si-C composite, or the like doped with the $M^b$ metal. A metal-doped silicon-based negative electrode active material has a degraded active material capacity due to the doping element, but has a high efficiency, and thus, may implement high energy density.

In addition, the silicon-based negative electrode active material may further include, if necessary, a carbon coating layer on the surface of the particle. In this case, the carbon coating amount may be 20 wt% or less, preferably 0.1 wt% to 20 wt%, based on the total weight of the silicon-based negative electrode active material. When carbon coating is applied, the electrical conductivity of the silicon surface is improved, thereby improving the uniformity of an SEI layer, and there is an effect of improving initial efficiency and lifespan properties.

The carbon coating layer may be formed by dry coating, wet coating, chemical vapor deposition (CVD), physical vapor deposition (PVD), atomic layer deposition (ALD), or the like.

The silicon-based negative electrode active material preferably has a capacity of 1000 mAh/g to 4000 mAh/g, preferably 1000 mAh/g to 3800 mAh/g, and more preferably 1200 mAh/g to 3800 mAh/g. If a silicon-based negative electrode active material satisfying the above-described capacity range is used, high-capacity properties may be implemented.

The silicon-based negative electrode active material may have initial efficiency of 60% to 95%, preferably 70% to 95%, and more preferably 75% to 95%. The initial efficiency of the silicon-based negative electrode active material refers to the percentage of a discharge capacity to a charging capacity measured by manufacturing a half-cell using a negative electrode in which a silicon-based negative electrode is used 100% as a negative electrode active material, and a lithium counter electrode, and then charging and discharging the half-cell between 0.01 V to 1.5 V at a 0.1 C-rate. If the initial efficiency of the silicon-based negative electrode active material satisfies the above-described range, lithium provided from the positive electrode may be reversibly used, and excellent rapid charging performance may be implemented.

The negative electrode may further include a carbon-based negative electrode active material as the negative electrode active material. The carbon-based negative electrode active material may be, for example, artificial graphite, natural graphite, graphitized carbon fiber, amorphous carbon, soft carbon, hard carbon, or the like, but is not limited thereto.

The silicon-based negative electrode active material may be included in an amount of 1 wt% to 100 wt%, 1 wt% to 50 wt%, 1 wt% to 30 wt%, 1 wt% to 15 wt%, 10 wt% to 70 wt%, or 10 wt% to 50 wt% based on the total weight of the negative electrode active material.

The carbon-based negative electrode active material may be included in an amount of 0 wt% to 99 wt%, 50 wt% to 99 wt%, 70 wt% to 99 wt%, 85 wt% to 99 wt%, 30 wt% to 90 wt%, or 50 wt% to 90 wt% based on the total weight of the negative electrode active material.

The negative electrode active material may be a mixture of a silicon-based negative electrode active material and a carbon-based negative electrode active material, and in this case, the mixing ratio of the silicon-based negative electrode active material : the carbon-based negative electrode active material may be 1 : 99 to 50 : 50, preferably 3 : 97 to 30 : 70 in a weight ratio. If the mixing ratio of the silicon-based negative electrode active material to the carbon-based negative electrode active material satisfies the above-described range, the volume expansion of the silicon-based negative electrode active material is suppressed while improving capacity properties, so that excellent cycle performance may be secured.

The negative electrode active material may be included in an amount of 80 wt% to 99 wt% based on the total weight of the negative electrode active material layer. If the content of the negative electrode active material satisfies the above range, excellent capacity properties and electrochemical properties may be obtained.

Examples of the conductive material may include, for example, spherical or flaky graphite, natural graphite or artificial graphite; a carbon-based material such as carbon black, acetylene black, Ketjen black, channel black, furnace black, lamp black, summer black, carbon fiber, single-walled carbon nanotubes, or multi-walled carbon nanotubes, metal powder or metal fiber of such as copper, nickel, aluminum, or silver, a conductive whisker such as a zinc oxide whisker or a potassium titanate whisker, a conductive metal oxide such as a titanium oxide, a conductive polymer such as a polyphenylene derivative, and the like, and any one thereof or a mixture of two or more thereof may be used. The conductive material may be included in an amount of 0.1 wt% to 30 wt%, 1 wt% to 20 wt%, or 1 wt% to 10 wt% based on the total weight of the negative electrode active material layer.

Preferably, single-walled carbon nanotubes may be used as the conductive material. If the single-walled carbon nanotubes are used as the conductive material, a conductive path is evenly formed on the surface of the negative electrode active material, and as a result, an effect of improving cycle properties may be obtained.

Examples of the binder may include, for example, polyvinylidene fluoride (PVDF), a polyvinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM) rubber, a sulfonated-EPDM, styrene butadiene rubber (SBR), fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt% based on the total weight of the negative electrode active material layer.

In the negative electrode, the negative electrode active material layer may have a single layer or have a multi-layered structure composed of two or more layers. If the negative electrode active material layer has the multi-layered structure composed of two or more layers, each layer may have different types and/or contents of a negative electrode active material, a binder, and/or a conductive material. For example, in the negative electrode according to the present invention, the content of the carbon-based negative electrode active material in a lower layer may be formed to be higher than that in an upper layer, and the content of the silicon-based negative electrode active material may be formed to be high in the upper layer, and in this case, compared to a case in which the negative electrode active material layer is formed as a single layer, an effect of improving rapid charging performance may be obtained.

**(2) Separator**

In the lithium secondary battery, the separator is to separate the negative electrode and the positive electrode and to provide a movement path for lithium ions, and any separator may be used without particular limitation as long as it is a separator commonly used in a lithium secondary battery, and particularly, a separator having excellent moisture-retention capability for an electrolyte solution as well as low resistance to ion movement in the electrolyte is preferable. Specifically, a porous polymer film, for example, a porous polymer film manufactured using a polyolefinic polymer, such as an ethylene homopolymer, a propylene homopolymer, an ethylene/butene copolymer, an ethylene/hexene copolymer, and an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

**(3) Electrolyte**

In the lithium secondary battery, the electrolyte may be an organic-based liquid electrolyte, an inorganic-based liquid electrolyte, a solid polymer electrolyte, a gel-type polymer electrolyte, a solid inorganic electrolyte, a molten-type inorganic electrolyte, and the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used.

Any compound may be used as the lithium salt without particular limitation as long as it is a compound capable of providing lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiN(FSO_2)_2$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 5.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. In this case, the additive may be included in 0.1 parts by weight to 5 parts by weight based on the total weight of 100 parts by weight of the electrolyte.

Hereinafter, the present invention will be described in more detail with reference to examples. However, the following examples are merely illustrative of the present invention and are not intended to limit the scope of the present invention.

**Examples and Comparative Examples**

**Preparation Example 1**

A transition metal precursor $Ni_{0.8}Co_{0.09}Mn_{0.1}Al_{0.01}(OH)_2$ having an average particle diameter ($D_{50}$) of 3.7 $\mu$m and LiOH were mixed such that the molar ratio of Ni+Co+Mn+Al : Li was to be 1:1.03, and $Zr(SO_4) \cdot 4H_2O$ was mixed therewith in an amount of 1000 ppm based on the total weight of the transition metal precursor to prepare a mixture. Thereafter, the mixture was subjected to primary firing at 850 °C for 18 hours to obtain a primary fired product.

Next, secondary firing was performed thereon at 780 °C for 10 hours to prepare a lithium composite transition metal oxide having a roundness described in Table 1 below.

**Preparation Example 2**

A lithium composite transition metal oxide having a roundness described in Table 1 below was prepared in the same manner as in Preparation Example 1, except that a transition metal precursor having an average particle diameter ($D_{50}$) of 3.8 $\mu$m was used.

**Preparation Example 3**

A lithium composite transition metal oxide having a roundness described in Table 1 below was prepared in the same manner as in Preparation Example 1, except that the primary firing was performed at 900 °C for 12 hours, and the secondary firing was performed at 800 °C for 10 hours.

**Preparation Example 4**

A lithium composite transition metal oxide having a roundness described in Table 1 below was prepared in the same manner as in Preparation Example 1, except that the primary firing was performed at 800 °C for 12 hours, and the secondary firing was performed at 750 °C for 10 hours.

[Table 1]

|  | Preparation Example 1 | Preparation Example 2 | Preparation Example 3 | Preparation Example 4 |
|---|---|---|---|---|
| Roundness | 0.60 | 0.64 | 0.69 | 0.49 |

The roundness was measured by photographing the lithium composite transition metal oxide at a magnification of 2000 by using a Scanning Electron Microscope (SEM), and then obtaining about 300 particle images by using an Image Analysis Management (IAM) program.

**Example 1**

The lithium composite transition metal oxide of Preparation Example 1 and Co(OH)$_2$ were mixed at a weight ratio of 100:2, and heat-treated at 700 °C for 6 hours to prepare an intermediate in which a cobalt coating layer was formed as a first coating layer.

The intermediate and H$_3$BO$_3$ were mixed at a weight ratio of 100:0.2, and heat-treated at 400 °C for 6 hours to prepare a positive electrode active material in which a boron coating layer was formed as a second coating layer.

The boron content in the positive electrode active material is shown in Table 2 below.

**Example 2**

A positive electrode active material was prepared in the same manner as in Example 1, except that the lithium composite transition metal oxide of Preparation Example 2 was used, and the intermediate and H$_3$BO$_3$ were mixed at a weight ratio of 100:0.1.

The boron content in the positive electrode active material is shown in Table 2 below.

**Comparative Example 1**

A positive electrode active material was prepared in the same manner as in Example 1, except that the process of forming a boron coating layer as a second coating layer was omitted.

The boron content in the positive electrode active material is shown in Table 2 below.

**Comparative Example 2**

A positive electrode active material was prepared in the same manner as in Example 1, except that the intermediate and H$_3$BO$_3$ were mixed at a weight ratio of 100:0.2.

The boron content in the positive electrode active material is shown in Table 2 below.

**Comparative Example 3**

A positive electrode active material was prepared in the same manner as in Example 1, except that the lithium composite transition metal oxide of Preparation Example 3 was used.

The boron content in the positive electrode active material is shown in Table 2 below.

**Comparative Example 4**

A positive electrode active material was prepared in the same manner as in Example 1, except that the lithium composite transition metal oxide of Preparation Example 4 was used.

The boron content in the positive electrode active material is shown in Table 2 below.

[Table 2]

| | Example 1 | Example 2 | Comparative Example 1 | Comparative Example 2 | Comparative Example 3 | Comparative Example 4 |
|---|---|---|---|---|---|---|
| Boron content [ppm] | 1300 | 500 | 0 | 2500 | 1300 | 1300 |

The content of boron in the positive electrode active material prepared according to each of Examples 1 and 2 and Comparative Examples 1 to 4 was measured by an Inductively Coupled Plasma (ICP) method through an ICP-OES (PerkinElmer, Optima7300DV) device.

**Experimental Example 1**

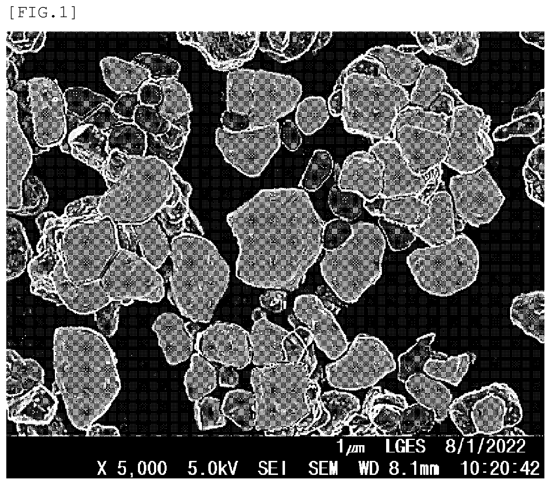

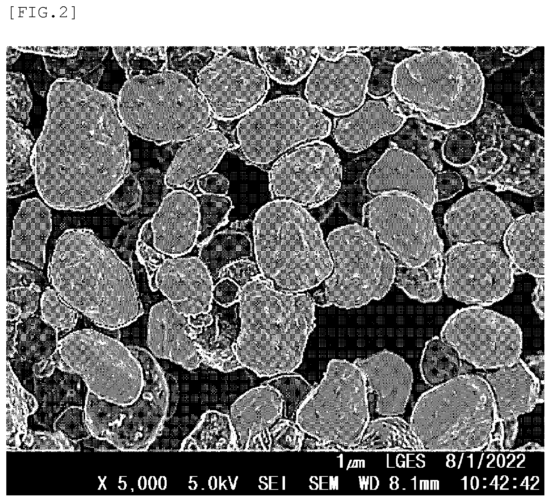

The positive electrode active material prepared in each of Example 1 and Comparative Example 1 was analyzed by Scanning Electron Microscopy (SEM) to confirm the surface and internal structure of the positive electrode active material. The measurement results are shown in FIG. 1 and FIG. 2.

Referring to FIG. 1 and FIG. 2, it can be seen that the positive electrode active material prepared by each of Example 1 and Comparative Example 1 was composed of lithium composite transition metal compound particles in the form of a single particle composed of one nodule or a pseudo-single particle, which is a composite of 30 or fewer nodules.

**Experimental Example 2: Gas generation amount measurement**

**<Manufacturing of lithium secondary battery>**

The positive electrode active material prepared in each of Examples 1 and 2 and Comparative Examples 1 to 4 : carbon nanotubes : PVDF were mixed at a weight ratio of 95:2:3 in N-methylpyrrolidone to prepare a positive electrode slurry. The positive electrode slurry was applied on an aluminum current collector sheet, dried, and then roll-pressed to manufacture a positive electrode.

A negative electrode active material in which SiO and graphite were mixed at a weight ratio of 5:95 : carbon nanotubes : styrene-butadiene rubber (SBR) were mixed at a weight ratio of 95.5:1:3.5 in water to prepare a negative electrode slurry. The negative electrode slurry was applied on a copper current collector sheet, dried, and then roll-pressed to manufacture a negative electrode.

A separator was interposed between the positive electrode and the negative electrode, which were manufactured as described above, to manufacture an electrode assembly, and the electrode assembly was placed inside a case, followed by injecting an electrolyte solution into the case to manufacture a lithium secondary battery.

In this case, the electrolyte solution was prepared by dissolving lithium hexafluorophosphate ($LiPF_6$) having a concentration of 1.0 M in an organic solvent in which ethylene carbonate/ethylmethyl carbonate/diethyl carbonate were mixed at a volume ratio of 3:4:4.

**<Measurement of gas generation amount>**

Each of the lithium secondary batteries manufactured above was charged to SOC 100, and then each of the lithium secondary batteries was disassembled to separate the positive electrode. Then, the positive electrode and 400 $\mu\ell$ of the electrolyte solution were put into a pouch-type battery case, and the battery case was sealed to manufacture a cell, and the cell was stored at 60 °C for 8 weeks to measure changes in cell volume ($\Delta$Cell volume, unit: m$\ell$) before and after the high-temperature storage. The cell volume change was measured by placing the cell in water and then measuring the volume change of the water. The measurement results are shown in Table 3 below.

[Table 3]

| | Example 1 | Example 2 | Comparative Example 1 | Comparative Example 2 | Comparative Example 3 | Comparative Example 4 |
|---|---|---|---|---|---|---|
| Gas generation amount [$\mu\ell$] | 0.11 | 0.21 | 0.35 | 0.28 | 0.23 | 0.35 |

As shown in Table 3 above, the lithium secondary batteries to which the positive electrode active materials prepared according to Examples 1 and 2 of the present invention have less gas generation than the lithium secondary batteries to which the positive electrode active materials prepared according to Comparative Examples 1 to 4.

**Experimental Example 3: Evaluation of high-temperature lifespan properties**

Each of the lithium secondary batteries manufactured above was charged to 4.25 V with 0.5 C, and then discharged to 2.5 V with 1 C, the whole process of which was set to one cycle, and 100 cycles of the charging and discharging were performed to measure a capacity retention rate and a resistance increase rate so as to evaluate lifespan properties. The measurement results are shown in Table 4 below.
In this case, the capacity retention rate and the resistance increase rate were calculated through Equation 2 and Equation 3 below.

Capacity retention rate (%) = (discharge capacity after 100 cycles / discharge capacity after 1 cycle) $\times$ 100    Equation 2:

Resistance increase rate (%) = {(resistance after 100 cycles / resistance after 1 cycle) $\times$ 100} - 100    Equation 3:

[Table 4]

| | Example 1 | Example 2 | Comparative Example 1 | Comparative Example 2 | Comparative Example 3 | Comparative Example 4 |
|---|---|---|---|---|---|---|
| Capacity retention rate [%] | 96.1 | 95.0 | 87.6 | 90.8 | 90.0 | 91.8 |
| Resistance increase rate [%] | 14.8 | 18.8 | 35.7 | 30.3 | 28.7 | 27.8 |

As shown in Table 4 above, the lithium secondary batteries to which the positive electrode active materials prepared according to Examples 1 and 2 of the present invention have a higher capacity retention rate and a lower resistance increase rate than the lithium secondary batteries to which the positive electrode active materials prepared according to Comparative Examples 1 to 4, and thus, can be seen to have excellent high-temperature lifespan properties.

**Claims**

1. A positive electrode active material comprising:

a lithium composite transition metal oxide in the form of a single particle composed of one nodule or a pseudo-single particle, which is a composite of 30 or fewer nodules; and
a coating layer including a first coating layer formed on the surface of the lithium composite transition metal oxide and a second coating layer formed on the surface of the first coating layer,
wherein:

the lithium composite transition metal oxide has a roundness, which is defined by Equation 1 below, of 0.50 to 0.68; and

the second coating layer contains boron, wherein the boron is included in a weight of 300 ppm to 2400 ppm based on the total weight of the positive electrode active material:

$$[Equation\ 1]$$

$$Roundness = (4 \times Area) / (\pi \times R^2)$$

wherein in Equation 1 above, R denotes the length of a major axis passing through the center of the lithium composite transition metal oxide, and Area denotes an actual area of the lithium composite transition metal oxide.

2. The positive electrode active material of claim 1, wherein the lithium composite transition metal oxide has a composition represented by Formula 1 below:

[Formula 1]    $Li_{1+x}Ni_aCo_bMn_cAl_dM^1_eO_2$

wherein in Formula 1 above, $M^1$ is one or more selected from the group consisting of W, Zr, Y, Ba, Ca, Ti, Mg, Ta, and Nb, and $0 \leq x \leq 0.5$, $0.8 \leq a < 1.0$, $0 < b \leq 0.1$, $0 < c < 0.2$, $0 < d \leq 0.05$, and $0 \leq e \leq 0.05$.

3. The positive electrode active material of claim 1, wherein the lithium composite transition metal compound has a nickel content of 80 mol% or greater among all metals excluding lithium.

4. The positive electrode active material of claim 1, wherein the lithium composite transition metal oxide has an average particle diameter ($D_{50}$) of 1 $\mu$m to 8 $\mu$m.

5. The positive electrode active material of claim 1, wherein the lithium composite transition metal oxide has the roundness of 0.58 to 0.65.

6. The positive electrode active material of claim 1, wherein the first coating layer comprises one or more selected from the group consisting of Ni, Co, and Al.

7. The positive electrode active material of claim 1, wherein the boron is included in a weight of 400 ppm to 1400 ppm based on the total weight of the positive electrode active material.

8. The positive electrode active material of claim 1, wherein the positive electrode active material has a BET specific surface area of 0.4 $m^2$/g to 1.0 $m^2$/g.

9. A positive electrode comprising the positive electrode active material of claim 1.

10. A lithium secondary battery comprising the positive electrode of claim 9, a negative electrode, a separator interposed between the positive electrode and the negative electrode, and an electrolyte.

11. The lithium secondary battery of claim 10, wherein the negative electrode comprises a negative electrode active material layer including a silicon-based negative electrode active material.

12. The lithium secondary battery of claim 11, wherein the negative electrode further comprises a carbon-based negative electrode active material.

[FIG.1]

[FIG.2]

## INTERNATIONAL SEARCH REPORT

| International application No. |
| --- |
| **PCT/KR2024/020843** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/131**(2010.01)i; **H01M 10/052**(2010.01)i; **C01G 53/50**(2025.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01B 35/00(2006.01); H01M 10/052(2010.01); H01M 10/0525(2010.01); H01M 10/0562(2010.01); H01M 4/40(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 양극활물질 (cathode active material), 리튬 복합 전이금속 산화물 (lithium composite transition metal oxide), 진원도 (roundness), 코팅층 (coating layer), 붕소 (boron)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0098072 A (LG ENERGY SOLUTION, LTD.) 03 July 2023 (2023-07-03)<br>See claim 1; paragraphs [0087] and [0168]; and example 1. | 1-12 |
| A | KR 10-2315939 B1 (SK INNOVATION CO., LTD.) 20 October 2021 (2021-10-20)<br>See claim 1; and paragraphs [0106], [0121] and [0143]-[0158]. | 1-12 |
| A | KR 10-2022-0055953 A (LG CHEM, LTD.) 04 May 2022 (2022-05-04)<br>See claims 1 and 2; and paragraphs [0216]-[0218]. | 1-12 |
| A | KR 10-2023-0095518 A (POSCO HOLDINGS INC. et al.) 29 June 2023 (2023-06-29)<br>See claims 1, 3 and 6. | 1-12 |
| A | US 2019-0198870 A1 (OSAKA PREFECTURE UNIVERSITY PUBLIC CORPORATION) 27 June 2019 (2019-06-27)<br>See claim 1. | 1-12 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 March 2025** | **28 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020843**

| Patent document cited in search report | | | Publication date (day/month/year) | Patent family member(s) | | | Publication date (day/month/year) |
|---|---|---|---|---|---|---|---|
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| KR | 10-2315939 | B1 | 20 October 2021 | CN | 113328070 | A | 31 August 2021 |
| | | | | CN | 113823778 | A | 21 December 2021 |
| | | | | EP | 3926708 | A1 | 22 December 2021 |
| | | | | KR | 10-2207997 | B1 | 25 January 2021 |
| | | | | US | 2021-0399302 | A1 | 23 December 2021 |
| | | | | US | 2022-0013781 | A1 | 13 January 2022 |
| KR | 10-2022-0055953 | A | 04 May 2022 | | None | | |
| KR | 10-2023-0095518 | A | 29 June 2023 | CN | 118435376 | A | 02 August 2024 |
| | | | | EP | 4456187 | A1 | 30 October 2024 |
| | | | | US | 2025-0054953 | A1 | 13 February 2025 |
| | | | | WO | 2023-121145 | A1 | 29 June 2023 |
| US | 2019-0198870 | A1 | 27 June 2019 | CN | 109643796 | A | 16 April 2019 |
| | | | | CN | 109643796 | B | 10 May 2022 |
| | | | | EP | 3503270 | A1 | 26 June 2019 |
| | | | | EP | 3503270 | A4 | 15 April 2020 |
| | | | | EP | 3503270 | B1 | 25 January 2023 |
| | | | | JP | 7049665 | B2 | 07 April 2022 |
| | | | | US | 10840507 | B2 | 17 November 2020 |
| | | | | WO | 2018-038037 | A1 | 01 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230188929
- KR 1020240191934